# EUROPEAN PATENT APPLICATION

(11) **EP 4 850 796 A1**
(43) Date of publication of application: **09.12.2026**
(21) Application number: 24922093.0
(22) Date of filing: 10.10.2024
(51) Int. Cl.: B01D 71/02, B01D 69/00, B01D 69/10, B01D 69/12, C01B 39/02, C01B 39/04

(54) **SEPARATION MEMBRANE COMPOSITE AND METHOD FOR PRODUCING SEPARATION MEMBRANE COMPOSITE**

(30) Priority: 29.01.2024 JP 2024010863
(71) Applicant: NGK Corporation, Nagoya-shi, Aichi 467-8530 (JP)
(72) Inventor: AMANO, Nao, Nagoya-shi, Aichi 467-8530 (JP); MIURA, Aya, Nagoya-shi, Aichi 467-8530 (JP)
(74) Representative: Müller-Boré & Partner Patentanwälte PartG mbB
(86) International application number: PCT/JP2024/036308
(87) International publication number: WO 2025/163983

(57) **Abstract**

A separation membrane complex (1) includes a porous support (11), a first separation layer (13) in contact with a surface of the support (11), which is a membrane composed of zeolite, and a second separation layer (14) in contact with a surface of the first separation layer (13) on an opposite side to the support (11), which is an amorphous membrane in which zeolite fine particles (141) are mixed. It is thereby possible to suppress reduction in separation performance in the use of the separation membrane complex (1) at high pressure.

## Description

### TECHNICAL FIELD

The present invention relates to a separation membrane complex and a method of producing a separation membrane complex.

### [CROSS REFERENCE TO RELATED APPLICATION]

The present application claims the benefit of priority to Japanese Patent Application No. 2024-10863 filed on January 29, 2024, the content of which is incorporated herein by reference in its entirety.

### BACKGROUND ART

Conventionally, a zeolite membrane is used as a separation membrane using a molecular sieving function. The zeolite membrane is ordinarily formed on a porous support and handled as a separation membrane complex. Japanese Patent Application Laid Open Gazette No. 2020-163369 (Document 1), for example, discloses a zeolite membrane complex in which a zeolite membrane composed of 6-membered ring zeolite is formed on a support. In the zeolite membrane, among a plurality of zeolite crystal grains positioned on a surface thereof, the zeolite crystal grains each having a short diameter of 300 nm or less in the surface account for 85 % or more of the area of the surface, it thereby becomes possible to easily remove an organic structure-directing agent (hereinafter, referred to as an "organic SDA") from the zeolite membrane. Further, Japanese Patent Application Laid Open Gazette No. 2007-320819 (Document 2) discloses a method of producing SOD-type zeolite, and in the production method, a reaction solution is heated to 80 to 200 °C to thereby synthesize organic SDA-containing zeolite, and then the organic SDA is removed by heat treatment at not lower than 500 °C and not higher than 1200 °C. Japanese Patent Application Laid Open Gazette No. 2012-246207 (Document 3) discloses a method of synthesizing an SOD-type zeolite membrane not containing an organic SDA.

Further, International Publication WO 2023/140335 (Document 4) discloses a composite separation structure having a zeolite layer disposed in contact with a base part and an amorphous silica layer disposed in contact with the zeolite layer. Japanese Patent No. 6622714 (Document 5) discloses a zeolite membrane structure in which a first zeolite membrane is formed on a support and a second zeolite membrane is formed on the first zeolite membrane. International Publication WO 2017/169591 (Document 6) discloses a method of producing a porous support and a method of synthesizing a DDR-type zeolite membrane.

As shown in Documents 1 and 2, in a case where the organic SDA is removed by firing the zeolite membrane, microcracks sometimes occur in the zeolite membrane. In this case, when a separation membrane complex is used at high pressure, there are some cases where the microcracks develop into cracks in the zeolite membrane and the separation performance thereof is reduced.

### SUMMARY OF THE INVENTION

It is an object of the present invention to suppress reduction in separation performance in the use of a separation membrane complex at high pressure.

A first aspect of the present invention is intended for a separation membrane complex, and the separation membrane complex according to the first aspect includes a porous support, a first separation layer in contact with a surface of the support, which is a membrane composed of zeolite, and a second separation layer in contact with a surface of the first separation layer on an opposite side to the support, which is an amorphous membrane in which zeolite fine particles are mixed.

According to the present invention, it is possible to suppress reduction in separation performance in the use of the separation membrane complex at high pressure.

A second aspect of the present invention is intended for the separation membrane complex according to the first aspect, and in the separation membrane complex according to the second aspect, a thickness of the second separation layer is not smaller than 5 nm and not larger than 200 nm.

A third aspect of the present invention is intended for the separation membrane complex according to the first or second aspect, and in the separation membrane complex according to the third aspect, an average particle diameter of the zeolite fine particles contained in the second separation layer is not smaller than 1 nm and not larger than 100 nm.

A fourth aspect of the present invention is intended for the separation membrane complex according to any one of the first to third aspects, and in the separation membrane complex according to the fourth aspect, a proportion of the zeolite fine particles in the second separation layer is not lower than 20 % in a cross section perpendicular to the surface of the support.

A fifth aspect of the present invention is intended for a method of producing a separation membrane complex, and the method of producing a separation membrane complex according to the fifth aspect includes a) preparing a porous support, b) forming a first separation layer which is a membrane composed of zeolite, on a surface of the support, and c) forming a second separation layer which is an amorphous membrane in which zeolite fine particles are mixed, on a surface of the first separation layer on an opposite side to the support, and in the method of producing a separation membrane complex, the operation c) includes c1) immersing the support on which the first separation layer is formed, in a pretreatment liquid containing an oxide of a constituent element which is to constitute the zeolite fine particles, for a predetermined time, c2) taking the support out from the pretreatment liquid and drying the support, c3) forming the second separation layer on the support by immersing the support in a starting material solution containing the constituent element and an organic structure-directing agent and performing hydrothermal synthesis, and c4) removing the organic structure-directing agent from the second separation layer on the support.

A sixth aspect of the present invention is intended for the method of producing a separation membrane complex according to the fifth aspect, and the method of producing a separation membrane complex according to the sixth aspect further includes immersing the support on which the second separation layer is formed, in a posttreatment liquid prepared to have a pH of 9 or higher, for one day or more between the operation c3) and the operation c4).

These and other objects, features, aspects and advantages of the present invention will become more apparent from the following detailed description of the present invention when taken in conjunction with the accompanying drawings.

### BRIEF DESCRIPTION OF DRAWINGS

FIG. 1 is a cross-sectional view of a separation membrane complex;
FIG. 2 is a cross-sectional view enlargedly showing part of the separation membrane complex;
FIG. 3 is a view used for explaining a structure of a second separation layer;
FIG. 4 is a flowchart showing a flow for producing the separation membrane complex;
FIG. 5 is a view showing a separation apparatus; and
FIG. 6 is a flowchart showing a flow for separating a mixed substance.

### DESCRIPTION OF EMBODIMENTS

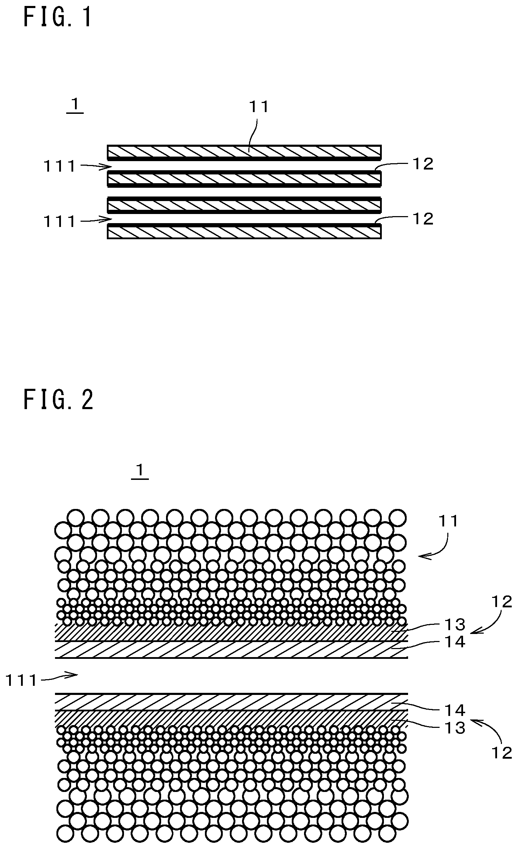

FIG. 1 is a cross-sectional view of a separation membrane complex 1. FIG. 2 is a cross-sectional view enlargedly showing part of the separation membrane complex 1. The separation membrane complex 1 includes a porous support 11 and a laminated membrane 12 formed on the support 11. In FIG. 1, the laminated membrane 12 is represented by a thick line. The laminated membrane 12 includes a first separation layer 13 and a second separation layer 14. The first separation layer 13 is formed on the support 11 and the second separation layer 14 is formed on the first separation layer 13. In FIG. 2, the first separation layer 13 and the second separation layer 14 are hatched at different intervals. Further, in FIG. 2, the respective thicknesses of the first separation layer 13 and the second separation layer 14 are shown larger than the actual ones.

The support 11 is a porous member that gas and liquid can permeate. In the exemplary case shown in FIG. 1, the support 11 is a monolith-type support having an integrally and continuously molded columnar main body provided with a plurality of through holes 111 each extending in a longitudinal direction (i.e., a left and right direction in FIG. 1). In the exemplary case shown in FIG. 1, the support 11 has a substantially columnar shape. A cross section of each of the through holes 111 (i.e., cells) perpendicular to the longitudinal direction is, for example, substantially circular. In Fig. 1, the diameter of each through hole 111 is larger than the actual diameter, and the number of through holes 111 is smaller than the actual number. The laminated membrane 12 is formed on an inner surface of each through hole 111, covering substantially the entire inner surface of the through hole 111.

The length of the support 11 (i.e., the length in the left and right direction of FIG. 1) is, for example, 10 cm to 200 cm ("to" means not smaller than the number before "to" and not larger than the number after "to"). The outer diameter of the support 11 is, for example, 0.5 cm to 30 cm. The distance between the central axes of adjacent through holes 111 is, for example, 0.3 mm to 10 mm. The surface roughness (Ra) of the support 11 is, for example, 0.1 µm to 5.0 µm, and preferably 0.2 µm to 2.0 µm. Further, the shape of the support 11 may be, for example, honeycomb-like, flat plate-like, tubular, cylindrical, columnar, polygonal prismatic, or the like. When the support 11 has a tubular or cylindrical shape, the thickness of the support 11 is, for example, 0.1 mm to 10 mm.

As the material for the support 11, various materials (for example, ceramics or a metal) may be adopted only if the materials ensure chemical stability in the process step of forming the laminated membrane 12 on the surface thereof. In the present preferred embodiment, the support 11 is formed of a ceramic sintered body. Examples of the ceramic sintered body which is selected as a material for the support 11 include alumina, silica, mullite, zirconia, titania, yttria, silicon nitride, silicon carbide, and the like. In the present preferred embodiment, the support 11 contains at least one type of alumina, silica, and mullite.

The support 11 may contain an inorganic binder. As the inorganic binder, at least one of titania, mullite, easily sinterable alumina, silica, glass frit, a clay mineral, and easily sinterable cordierite can be used.

The average pore diameter of the support 11 is, for example, 0.01 µm to 70 µm, and preferably 0.05 µm to 25 µm. The average pore diameter of the support 11 in the vicinity of the surface on which the laminated membrane 12 is formed is 0.01 µm to 1 µm, and preferably 0.05 µm to 0.5 µm. The average pore diameter can be measured by using, for example, a mercury porosimeter, a perm porometer, or a nano-perm porometer. Regarding the pore diameter distribution of the entire support 11 including the surface and the inside thereof, D5 is, for example, 0.01 µm to 50 µm, D50 is, for example, 0.05 µm to 70 µm, and D95 is, for example, 0.1 µm to 2000 µm. The porosity of the support 11 in the vicinity of the surface on which the laminated membrane 12 is formed is, for example, 20 % to 60 %.

The support 11 has, for example, a multilayer structure in which a plurality of layers with different average pore diameters are layered in a thickness direction. The average pore diameter and the sintered particle diameter in a surface layer including the surface on which the laminated membrane 12 is formed are smaller than those in layers other than the surface layer. The average pore diameter in the surface layer of the support 11 is, for example, 0.01 µm to 1 µm, and preferably 0.05 µm to 0.5 µm. When the support 11 has a multilayer structure, the materials for the respective layers can be those described above. The materials for the plurality of layers constituting the multilayer structure may be the same as or different from one another.

As described earlier, on the surface of the support 11, the laminated membrane 12 is formed. The laminated membrane 12 can be used as a separation membrane for separating a specific substance from a mixed substance containing a plurality of types of substances, by using a molecular sieving function. As compared with the specific substance, any one of the other substances is harder to permeate the laminated membrane 12. In other words, the permeance of any other substance through the laminated membrane 12 is lower than that of the above specific substance. The laminated membrane 12 includes the first separation layer 13 in contact with the surface of the support 11 and the second separation layer 14 in contact with a surface of the first separation layer 13 on an opposite side to the support 11. The first separation layer 13 is a membrane composed of zeolite. The membrane composed of zeolite is obtained at least by forming zeolite on the surface of the support 11 in a membrane form and does not include a membrane obtained by simply dispersing zeolite particles in an organic membrane.

The thickness of the first separation layer 13 is, for example, 0.05 µm to 30 µm. The thickness of the first separation layer 13 is preferably not larger than 5 µm, more preferably not larger than 4 µm, and further preferably not larger than 3 µm. The thickness of the first separation layer 13 is preferably not smaller than 0.1 µm, and more preferably not smaller than 0.5 µm. The thickness of the first separation layer 13 can be measured by, for example, imaging a cross section of the first separation layer 13 perpendicular to the surface of the support 11 by using the scanning electron microscope (SEM) or the like.

The average pore diameter of the first separation layer 13 is preferably not larger than 1.0 nm, more preferably not larger than 0.8 nm, and further preferably not larger than 0.6 nm. The average pore diameter of the first separation layer 13 is preferably not smaller than 0.1 nm, more preferably not smaller than 0.2 nm, and further preferably not smaller than 0.3 nm. The average pore diameter of the first separation layer 13 is smaller than that of the support 11 in the vicinity of the surface on which the first separation layer 13 is formed.

When the maximum number of membered rings of the zeolite composing the first separation layer 13 is n, an arithmetic average of the short diameter and the long diameter of an n-membered ring pore is defined as the average pore diameter. The n-membered ring pore refers to a pore in which the number of oxygen atoms in the part where the oxygen atoms and T atoms are bonded to form a ring structure is n. When the zeolite has a plurality of types of n-membered ring pores having the same n, an arithmetic average of the short diameters and the long diameters of all the types of the n-membered ring pores is defined as the average pore diameter of the zeolite. Thus, the average pore diameter of the zeolite membrane is uniquely determined depending on the framework structure of the zeolite and can be obtained from values disclosed in "Database of Zeolite Structures" [online], internet <URL: http://www.iza-structure.org/databases/> of the International Zeolite Association.

There is no particular limitation on the type of the zeolite composing the first separation layer 13, but the first separation layer 13 may be composed of, for example, AEI-type, AEN-type, AFN-type, AFV-type, AFX-type, BEA-type, CHA-type, DDR-type, ERI-type, ETL-type, FAU-type (X-type, Y-type), GIS-type, LEV-type, LTA-type, MEL-type, MER-type, MFI-type, MOR-type, MTN-type, PAU-type, RHO-type, SAT-type, SOD-type, SZR-type zeolite, or the like. The maximum number of membered rings of zeolite composing the first separation layer 13 is preferably 8 or more. The first separation layer 13 is composed of, for example, DDR-type zeolite. In other words, the first separation layer 13 is a zeolite membrane composed of the zeolite having a structure code of "DDR" which is designated by the International Zeolite Association. In this case, the unique pore diameter of the zeolite composing the first separation layer 13 is 0.36 nm × 0.44 nm, and the average pore diameter is 0.40 nm.

The first separation layer 13 which is a zeolite membrane contains, for example, silicon (Si). The first separation layer 13 may contain, for example, any two or more of Si, aluminum (Al), and phosphorus (P). In this case, as the zeolite composing the first separation layer 13, zeolite in which atoms (T-atoms) each located at the center of an oxygen tetrahedron (TO₄) constituting the zeolite include only Si or Si and Al, AlPO-type zeolite in which T-atoms include Al and P, SAPO-type zeolite in which T-atoms include Si, Al, and P, MAPSO-type zeolite in which T-atoms include magnesium (Mg), Si, Al, and P, ZnAPSO-type zeolite in which T-atoms include zinc (Zn), Si, Al, and P, or the like can be used. Some of the T-atoms may be replaced by other elements.

When the first separation layer 13 contains Si atoms and Al atoms, the ratio of Si/Al in the first separation layer 13 is, for example, not less than 1 and not more than 100,000. The Si/Al ratio is preferably 5 or more, more preferably 20 or more, and further preferably 100 or more, and in short, the higher the ratio is, the better. By adjusting the mixing ratio of an Si source and an Al source in a later-described starting material solution, or the like, it is possible to adjust the Si/Al ratio in the first separation layer 13. The first separation layer 13 may contain an alkali metal. The alkali metal is, for example, sodium (Na) or potassium (K).

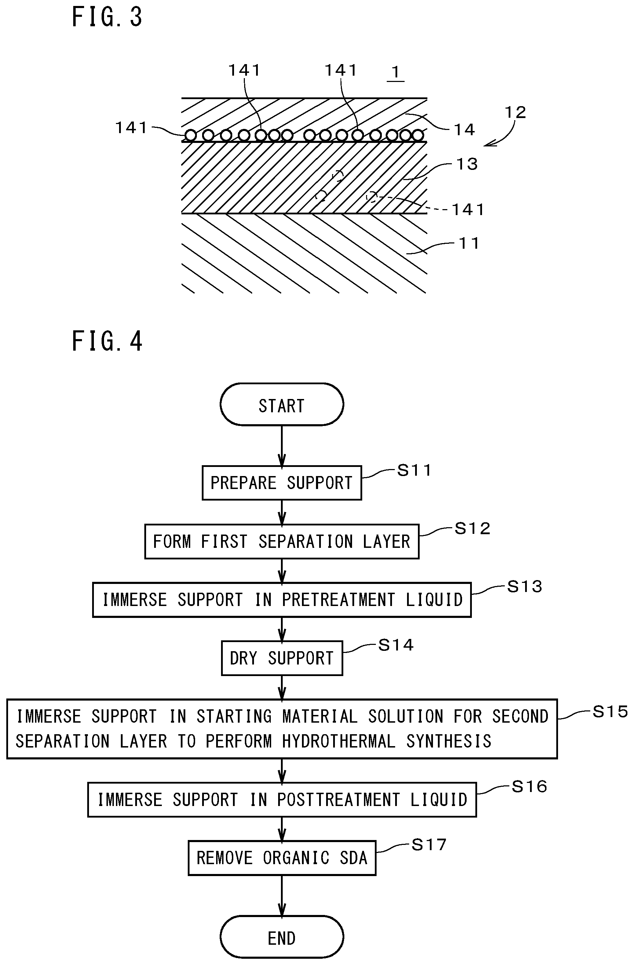

FIG. 3 is a view used for explaining a structure of the second separation layer 14, and schematically shows a cross section perpendicular to the surface of the support 11 on which the laminated membrane 12 is formed. The second separation layer 14 is an amorphous membrane in which zeolite fine particles 141 are mixed. In the second separation layer 14, the amorphous substance is formed in a membrane form and the zeolite fine particles 141 exist in this membrane. As described later, in the separation membrane complex 1 in which this second separation layer 14 is formed, reduction in separation performance is suppressed when the separation membrane complex 1 is used at high pressure. The amorphous substance is, for example, an oxide, and typically an oxide of a constituent element constituting the zeolite fine particles. In the present preferred embodiment, amorphous substance is amorphous silica. The second separation layer 14 which is an amorphous silica membrane has various sizes of pore diameters, and the pore diameter distribution is wide.

The average particle diameter of the zeolite fine particles 141 is, for example, not larger than 200 nm, and preferably not larger than 150 nm. More preferable average particle diameter of the zeolite fine particles 141 is not smaller than 1 nm and not larger than 100 nm. Since the average particle diameter of the zeolite fine particles 141 is in the above-described range, in the production of the separation membrane complex 1 described later, it becomes possible to remove a large amount of organic SDA from the zeolite fine particles 141, and the permeance increases. The lower limit of the average particle diameter may be 3 nm, or may be 5 nm. The upper limit of the average particle diameter may be 90 nm, or may be 80 nm.

In the measurement of the average particle diameter of the zeolite fine particles 141, for example, acquired is an image (hereinafter, referred to as a "TEM image") obtained by imaging a cross section of the second separation layer 14 which is perpendicular to the surface of the support 11 by using a transmission electron microscope (TEM). The magnification thereof is, for example, 300000 times. In the TEM image, a region with no plaid pattern (interference fringe) is discriminated as an amorphous part and another region with a plaid pattern is discriminated as the zeolite fine particles 141. In each of two directions perpendicular to each other, a length between both ends of each zeolite fine particle 141 (e.g., a length of the long diameter thereof and a length in a direction perpendicular to the long diameter) is measured, and an average of the respective lengths in the two directions is obtained as a particle diameter of the zeolite fine particle 141. Then, an average of respective particle diameters of a predetermined number (e.g., ten) zeolite fine particles 141 which are randomly selected is obtained as the average particle diameter. Further, in a case where a particle diameter distribution of the zeolite fine particles 141 can be acquired, a median of the particle diameter distribution may be handled as the average particle diameter.

There is no particular limitation on the type of the zeolite composing the zeolite fine particle 141, but any one of the above-described types of zeolite, for example, can be used. Typically, the type of zeolite composing the zeolite fine particle 141 is different from that of zeolite composing the first separation layer 13. Preferably, the maximum number of membered rings of zeolite composing the zeolite fine particle 141 is smaller than that of zeolite composing the first separation layer 13. In other words, the average pore diameter of zeolite composing the zeolite fine particles 141 is smaller than that of zeolite composing the first separation layer 13. One preferable example of zeolite composing the zeolite fine particle 141 is six-membered ring zeolite whose maximum number of membered rings is six. Depending on characteristics or the like required for the separation membrane complex 1, the maximum number of membered rings of zeolite composing the zeolite fine particle 141 may be not smaller than that of zeolite composing the first separation layer 13. Further, the type of zeolite composing the zeolite fine particle 141 may be the same as that of zeolite composing the first separation layer 13.

An analysis of a crystal structure of the zeolite fine particles 141 can be performed by acquiring an FFT pattern of the zeolite fine particles 141 in the high-magnification TEM image. Further, the analysis of the crystal structure can be also performed by using a micro-XRD or a thin-film XRD. Furthermore, the crystal structure can be also analyzed by performing a ring structure analysis of zeolite by AFM-IR or UV Raman spectroscopy. In the analysis of the crystal structure of the zeolite fine particles 141, an appropriate analysis method in accordance with the size of the fine particle, the shape of the support, or the like can be selected.

In the exemplary case shown in FIG. 3, the zeolite fine particles 141 exist inside the second separation layer 14, along an interface with the first separation layer 13. In other words, most of the zeolite fine particles 141 contained in the second separation layer 14 are in contact with or close to the first separation layer 13. Inside the second separation layer 14, the zeolite fine particles 141 may exist away from the first separation layer 13. Further, inside the first separation layer 13, the zeolite fine particles 141 may exist in grain boundaries of zeolite crystals composing the first separation layer 13. The grain boundary is a grain boundary between the zeolite crystals in a low density layer and a dense layer described later, and for example, an amorphous part of the first separation layer 13. In FIG. 3, the zeolite fine particle 141 existing inside the first separation layer 13 is represented by a two-dot chain line. In a case where the zeolite fine particles 141 having a small average pore diameter exist also inside the first separation layer 13, in a gas permeation path of the separation membrane complex 1, it is possible to increase the path containing small pores and becomes possible to increase separation accuracy.

Typically, the thickness of the second separation layer 14 is smaller than that of the first separation layer 13. The thickness of the second separation layer 14 may be not smaller than that of the first separation layer 13. The thickness of the second separation layer 14 is, for example, not larger than 500 nm, preferably not larger than 250 nm, and more preferably not larger than 200 nm. When the thickness of the second separation layer 14 is reduced, the permeance of a substance with high permeability through the second separation layer 14 increases. The thickness of the second separation layer 14 is, for example, not smaller than 3 nm, and preferably not smaller than 5 nm. When the thickness of the second separation layer 14 is increased, the separation performance increases. The thickness of the second separation layer 14 can be measured by using, for example, the above-described TEM image.

As shown in FIG. 3, in a cross section perpendicular to the surface of the support 11, a proportion of the zeolite fine particles 141 in the second separation layer 14 is, for example, not lower than 5 %, preferably not lower than 15 %, and more preferably not lower than 20 %. When the proportion of the zeolite fine particles 141 increases, the separation performance increases. When the proportion of the zeolite fine particles 141 in the second separation layer 14 excessively increases, since microcracks are more likely to occur in the zeolite fine particles 141 during the later-described production of the separation membrane complex 1, the proportion of the zeolite fine particles 141 is, for example, not higher than 60 %, preferably not higher than 50 %, and more preferably not higher than 40 %. The proportion of the zeolite fine particles 141 in the second separation layer 14 can be obtained, for example, as the ratio of an area of the zeolite fine particles 141 to the whole area of the second separation layer 14 in the above-described TEM image. Specifically, in the cross section perpendicular to the surface of the support 11, a TEM image is acquired in a field of view including a range from a surface of the second separation layer 14 to the interface between the second separation layer 14 and the first separation layer 13, and the ratio of the area of the zeolite fine particles 141 to the whole area of the second separation layer 14 in the field of view is obtained as the above-described proportion. Preferably, such a measurement is performed at ten portions in total while the field of view is randomly changed, and an average of the ten values (respective proportions in the ten fields of view) is handled as the proportion of the zeolite fine particles 141 in the second separation layer 14.

Next, with reference to FIG. 4, one exemplary flow for producing the separation membrane complex 1 will be described. In the production of the separation membrane complex 1, first, the porous support 11 is prepared (Step S11). Further, seed crystals to be used for production of the first separation layer 13 are prepared. In one exemplary case where a DDR-type zeolite membrane is formed as the first separation layer 13, DDR-type zeolite powder is synthesized by hydrothermal synthesis, and the seed crystals are acquired from the zeolite powder. The zeolite powder itself may be used as the seed crystals, or may be processed by pulverization or the like, to thereby acquire the seed crystals.

Subsequently, the support 11 is immersed in a dispersion liquid in which the seed crystals are dispersed, and the seed crystals are thereby deposited onto the support 11. Alternatively, the dispersion liquid in which the seed crystals are dispersed is brought into contact with a portion on the support 11 where the first separation layer 13 is to be formed, and the seed crystals are thereby deposited onto the support 11. A support with seed crystals deposited is thereby produced. The seed crystals may be deposited onto the support 11 by any other method.

The support 11 on which the seed crystals are deposited is immersed in the starting material solution (synthetic sol) for the first separation layer. The starting material solution is produced by dissolving or dispersing, for example, a silicon source, an organic SDA, or the like in a solvent. The silicon source is, for example, colloidal silica, sodium silicate, fumed silica, alkoxide, or the like. The organic SDA is, for example, 1-adamantanamine or the like. The solvent is, for example, water. Then, the DDR-type zeolite is caused to grow from the seed crystals as nuclei by the hydrothermal synthesis, to thereby form the DDR-type zeolite membrane on the support 11. The zeolite membrane is the first separation layer 13. The temperature in the hydrothermal synthesis is, for example, 80 to 200 °C. The hydrothermal synthesis time is, for example, 3 to 100 hours.

After the hydrothermal synthesis is finished, the support 11 and the first separation layer 13 are washed with pure water. The support 11 (and the first separation layer 13) after being washed is dried at, for example, 80 °C. After drying of the support 11, a heat treatment is performed under an oxidizing gas atmosphere, to thereby burn and remove the organic SDA in the first separation layer 13. This allows micropores in the zeolite membrane to go therethrough. Preferably, the organic SDA is almost completely removed. The heating temperature for removing the organic SDA is, for example, 400 °C to 1200 °C. The heating time is, for example, 5 to 200 hours. The oxidizing gas atmosphere is an atmosphere containing oxygen and for example, the air. Through the above-described process, the first separation layer 13 with the pores going therethrough is obtained (Step S12).

In the first separation layer 13 of the present preferred embodiment, formed are a low density layer in contact with the support 11 and a dense layer which is not in contact with the support 11 and covers the low density layer. The low density layer is a layer of the seed crystals deposited on the support 11 and in the vicinity thereof, and the dense layer is a layer composed of zeolite crystals which have grown from the seed crystals. The low density layer and the dense layer each contain the zeolite crystals and grain boundaries. The grain boundary is a region between adjacent zeolite crystals. The grain boundary contains, for example, amorphous, crystals other than zeolite crystals and/or voids. The content percentage of zeolite crystals in the dense layer is higher than that in the low density layer. Further, in formation of the zeolite membrane, a process of depositing the seed crystals on the support 11 may be omitted, and in this case, the zeolite membrane is formed directly on the support 11. As a matter of course, a zeolite membrane composed of any zeolite other than DDR-type one may be formed as the first separation layer 13.

After the first separation layer 13 is formed on the support 11, an aqueous solution containing a predetermined oxide is prepared as a pretreatment liquid. The oxide is an oxide of a constituent element which is to constitute the zeolite fine particles 141 of the second separation layer 14, and contains, for example, silica. The oxide may further contain alumina. It is preferable that the constituent element should contain a main constituent element having the largest amount of substance among elements constituting the zeolite fine particles 141, except oxygen, and the main constituent element is, for example, silicon. The concentration of the constituent element in the pretreatment liquid is, for example, 1 to 60 mass %, and preferably 3 to 50 mass %.

In a case where the oxide of the constituent element is silica and alumina, the mass ratio of silica and alumina to the pretreatment liquid is, for example, the same as that of the later-described starting material solution for the second separation layer. The pretreatment liquid may contain only silica. Typically, the pretreatment liquid does not contain the organic SDA. The solvent of the pretreatment liquid may be any substance other than water. The support 11 on which the first separation layer 13 is formed is immersed in the pretreatment liquid for a predetermined time and a pretreatment for formation of the second separation layer 14 is performed (Step S13). The oxide of the above-described constituent element is thereby disposed on the surface of the first separation layer 13 (on a side opposite to the support 11). The temperature of the pretreatment liquid is, for example, 0 to 80 °C, and preferably 40 to 60 °C. The immersion time is, for example, 1 to 480 minutes, and preferably 5 to 30 minutes.

After that, the support 11 is taken out from the pretreatment liquid and the support 11 and the first separation layer 13 are dried (Step S14). The drying temperature is, for example, 50 to 150 °C, and the drying time is, for example, 30 to 480 minutes. Subsequently, the support 11 and the first separation layer 13 are immersed in the starting material solution for the second separation layer. The starting material solution is produced by dissolving or dispersing, for example, the oxide of the above-described constituent element, the organic SDA, and the like in a solvent. The oxide contains, for example, silica. The oxide may further contain alumina. The organic SDA is, for example, tetramethylammonium hydroxide or the like. The solvent is, for example, water. After that, by performing the hydrothermal synthesis, the amorphous membrane in which the zeolite fine particles 141 are mixed, i.e., the second separation layer 14 is formed on the first separation layer 13 (Step S15). The temperature during the hydrothermal synthesis is, for example, 80 to 230 °C. The hydrothermal synthesis time is, for example, 2 to 60 hours.

Though the reason why the amorphous membrane in which the zeolite fine particles 141 are mixed is formed through the above-described process is not necessarily clear, for example, it can be considered as follows. By performing the already-described pretreatment, the oxide of the constituent element of the zeolite fine particles 141 is deposited on the surface of the first separation layer 13. During the hydrothermal synthesis, the oxide is gradually dissolved in the starting material solution, and the concentration of the oxide in the vicinity of the surface of the first separation layer 13 increases, to thereby form an amorphous layer. When the hydrothermal synthesis is continued in this state, since crystal growth of zeolite is suppressed by the amorphous layer, the zeolite fine particles 141 are formed, being dispersed. As a result, formed is the amorphous membrane in which the zeolite fine particles 141 are mixed.

Though the zeolite fine particles 141 are formed inside the second separation layer 14, along the surface of the first separation layer 13 in the one exemplary case, the zeolite fine particles 141 can be formed inside the second separation layer 14 at a position away from the first separation layer 13, or in the grain boundaries inside the first separation layer 13, or the like. As described earlier, in Step S14, by thoroughly drying the support 11 and the first separation layer 13 before immersing the support 11 and the first separation layer 13 in the starting material solution for the second separation layer, the oxide of the above-described constituent element deposited on the surface of the first separation layer 13 is prevented from being dissolved easily (in a short time) into the starting material solution. During the hydrothermal synthesis, significant change in the composition of the starting material solution from that as intended (i.e., occurrence of significant composition deviation) is thereby suppressed.

After the hydrothermal synthesis is finished, the support 11 on which the first separation layer 13 and the second separation layer 14 (i.e., the laminated membrane 12) are formed is washed with pure water. After that, the support 11 is immersed in a posttreatment liquid and a posttreatment is performed (Step S16). The posttreatment liquid is a liquid which is prepared to have a pH of 9 or higher by, for example, mixing sodium hydroxide or the like into pure water. The solvent of the posttreatment liquid may be any substance other than water. Further, in a case where the pH of a cleaning solution (pure water or the like) in which the support 11 is immersed gradually increases to 9 or higher during the washing after the formation of the second separation layer 14, or the like case, the cleaning solution may be used as the posttreatment liquid. Thus, the posttreatment liquid may be prepared by any of various methods. Furthermore, this posttreatment may be performed consecutively to the washing after the formation of the second separation layer 14, or the washing and the posttreatment may be performed repeatedly a plurality of times.

In the second separation layer 14, the amorphous part is more unstable than the zeolite fine particles 141, and is easily dissolved in the alkaline posttreatment liquid. Therefore, by performing the posttreatment in Step S16, the density of the amorphous part in the second separation layer 14 becomes lower as compared with that before the posttreatment. The temperature of the posttreatment liquid is, for example, 0 to 50 °C. The time for immersion of the support 11 in the posttreatment liquid is one day or more. In terms of efficient production of the separation membrane complex 1, the upper limit of the immersion time is, for example, ten days. After that, the support 11 is taken out from the posttreatment liquid and washed with pure water. The support 11 and the laminated membrane 12 after washing are dried at, for example, 80 °C.

Subsequently, the heat treatment is performed on the support 11 under the oxidizing gas atmosphere, to thereby burn and remove the organic SDA in the zeolite fine particles 141 of the second separation layer 14 (Step S17). This allows micropores in the zeolite fine particles 141 to go therethrough, and the separation membrane complex 1 is thereby completed. Preferably, the organic SDA is almost completely removed. The heating time for removing the organic SDA is, for example, 30 to 100 hours. Further, the heating temperature is, for example, 400 to 700 °C, and preferably not higher than 500 °C. At that time, a stress is caused in the first separation layer 13 and the second separation layer 14 by the difference in the thermal expansion from the support 11, but in the second separation layer 14, the effect of the stress is relieved by the amorphous part, to thereby reduce the occurrence of the microcracks in the zeolite fine particles 141. As a result, when the separation membrane complex 1 is used at high pressure, it is possible to suppress reduction in the separation performance due to development of the microcracks into cracks in the zeolite fine particles 141. Further, removing of the organic SDA may be performed on the first separation layer 13 and the second separation layer 14 at the same time. Specifically, in Step S12 for forming the first separation layer 13, there may be a case where the process goes to Step S13 without removing the organic SDA in the zeolite composing the first separation layer 13 and the organic SDA in the zeolite composing the first separation layer 13 and that in the zeolite composing the second separation layer 14 are removed at the same time in Step S17 for removing the organic SDA.

Next, Examples of the separation membrane complex will be described. Table 1 shows the type of zeolite composing the first separation layer and that of zeolite composing the second separation layer and production conditions of the second separation layer in each of Examples 1 to 12 and Comparative Examples 1 and 2, and Table 2 shows various measurement results on the second separation layer and results of performance evaluations on the separation membrane complex.

**[Table 1]**

| | First Separation Layer | Second Separation Layer | | | | |
|---|---|---|---|---|---|---|
| | Type of Zeolite | Type of Zeolite | Concentration of Pretreatment Liquid [mass %] | Hydrothermal Synthesis Time [hours] | Immersion in Posttreatment Liquid | Firing Temperature [°C] |
| Example 1 | DDR | MTN | 50 | 8 | YES | 450 |
| Example 2 | DDR | MTN | 3 | 8 | YES | 450 |
| Example 3 | DDR | MTN | 10 | 4 | YES | 450 |
| Example 4 | DDR | MTN | 10 | 8 | NO | 450 |
| Example 5 | DDR | MTN | 10 | 8 | YES | 450 |
| Example 6 | DDR | MTN | 15 | 10 | YES | 450 |
| Example 7 | DDR | MTN | 30 | 10 | YES | 450 |
| Example 8 | DDR | MTN | 10 | 6 | YES | 450 |
| Example 9 | DDR | MTN | 40 | 15 | YES | 450 |
| Example 10 | FAU | SOD | 10 | 8 | YES | 450 |
| Example 11 | LTA | SOD | 10 | 8 | YES | 450 |
| Example 12 | MFI | ETL | 10 | 8 | YES | 450 |
| Comparative Example 1 | MTN | - | - | - | - | 700 |
| Comparative Example 2 | MTN | - | - | - | - | 450 |

**[Table 2]**

| | Second Separation Layer | | | Performance Evaluation | | | |
|---|---|---|---|---|---|---|---|
| | Film Thickness [nm] | Particle Diameter of Fine Particle [nm] | Proportion of Fine Particles | Hydrogen Permeance [nmol/s·m²·Pa] | Hydrogen/Methane Permeance Ratio (0.6 Mpa) | CF₄ Permeance (0.3 Mpa) [nmol/s·m²·Pa] | Retention Rate of High-Pressure |
| | | | | | | | Permeance Ratio to Low-Pressure |
| | | | | | | | Permeance Ratio |
| Example 1 | 250 | 120 | 30 | 20 | >1000 | 0.05 | Good |
| Example 2 | 4 | 1 | 5 | 1100 | 80 | 1 | Good |
| Example 3 | 30 | 10 | 15 | 300 | 200 | 0.5 | Good |
| Example 4 | 30 | 10 | 30 | 80 | 240 | 0.05 | Good |
| Example 5 | 30 | 10 | 30 | 300 | >1000 | 0.05 | Good |
| Example 6 | 50 | 25 | 30 | 280 | >1000 | 0.05 | Good |
| Example 7 | 100 | 50 | 30 | 250 | >1000 | 0.05 | Good |
| Example 8 | 30 | 10 | 20 | 300 | >1000 | 0.05 | Good |
| Example 9 | 180 | 90 | 25 | 200 | >1000 | 0.05 | Good |
| Example 10 | 30 | 10 | 30 | 300 | >1000 | 0.05 | Good |
| Example 11 | 30 | 10 | 30 | 300 | >1000 | 0.05 | Good |
| Example 12 | 30 | 10 | 20 | 500 | 600 | 0.05 | Good |
| Comparative Example 1 | - | - | - | 35 | 6 | 5 | Bad |
| Comparative Example 2 | - | - | - | 5 | 500 | 0.05 | Bad |

### <Production of Separation Membrane Complex in Examples 1 to 12>

### (Production of Support and Formation of First Separation Layer)

In the same manner as the production method disclosed in International Publication WO 2017/169591 (above-described Document 6), a porous alumina support having a multilayer structure is produced. After depositing seed crystals on the alumina support, the alumina support is immersed in a starting material solution for zeolite membrane and the hydrothermal synthesis is performed, to thereby form a zeolite membrane which is a first separation layer. After that, by heating the zeolite membrane with an electric furnace, an organic SDA in the zeolite membrane is burned and removed. Herein, in Examples 1 to 9, a DDR-type zeolite membrane is formed as the first separation layer in the same manner as the method of producing a DDR-type zeolite membrane disclosed in above-described Document 6.

In Example 10, an FAU-type zeolite membrane is formed as the first separation layer. As the seed crystals, FAU-type zeolite is used. In preparation of a starting material solution for the FAU-type zeolite membrane, 25.3 g of sodium hydroxide (manufactured by Sigma-Aldrich Co. LLC) and 1.5 g of sodium aluminate powder (manufactured by Sigma-Aldrich Co. LLC) are mixed into 160 g of distilled water. After that, 25.3 g of about 30 mass % of silica sol (trade name: Snowtex S manufactured by Nissan Chemical Corporation) is added thereto, and the solution is stirred with a magnetic stirrer (at room temperature for 30 minutes), to thereby obtain the starting material solution. Further, the starting material solution in Example 10 does not contain the organic SDA, but for removing adsorbed water, the same heating as described above is performed.

In Example 11, an LTA-type zeolite membrane is formed as the first separation layer. As the seed crystals, LTA-type zeolite is used. In preparation of a starting material solution for the LTA-type zeolite membrane, 5.0 g of sodium hydroxide (manufactured by Sigma-Aldrich Co. LLC) and 3.9 g of sodium aluminate powder (manufactured by Sigma-Aldrich Co. LLC) are mixed into 173 g of distilled water. Subsequently, 0.85 g of tetramethylammonium hydroxide solution is further mixed therein. After stirring the mixed solution at room temperature for one hour, colloidal silica (trade name: Snowtex 50T manufactured by Nissan Chemical Corporation) is added thereto, to thereby obtain the starting material solution.

In Example 12, an MFI-type zeolite membrane is formed as the first separation layer. As the seed crystals, MFI-type zeolite is used. In preparation of a starting material solution for the MFI-type zeolite membrane, 0.86 g of 40 mass % of tetrapropylammonium hydroxide solution (manufactured by SACHEM, Inc.) and 0.45 g of tetrapropylammonium bromide (manufactured by Wako Pure Chemical Corporation) are mixed. After that, 192.0 g of distilled water and 6.75 g of about 30 mass % of silica sol (trade name: Snowtex S manufactured by Nissan Chemical Corporation) are added thereto, and the solution is stirred with the magnetic stirrer (at room temperature for 30 minutes), to thereby obtain the starting material solution.

### (Formation of Second Separation Layer)

An aqueous solution containing an oxide of a constituent element which is to constitute a second separation layer is prepared as a pretreatment liquid. In Examples 1 to 9, the oxide of the constituent element is silica, and in Examples 10 to 12, the oxide of the constituent element is silica and alumina. Table 1 shows the concentration of the oxide of the constituent element in the pretreatment liquid in each of Examples 1 to 12 in the column of "Concentration of Pretreatment Liquid". The pretreatment is performed by immersing the alumina support on which the first separation layer is formed in the pretreatment liquid and keeping this state at 50 °C or higher for one hour. After that, the alumina support is taken out from the pretreatment liquid and dried at 100 °C.

After placing the alumina support after the pretreatment into a fluororesin inner cylinder (internal volume: 300 ml) of a stainless pressure-resistant container, the starting material solution for the second separation layer is put therein and heat treatment (hydrothermal synthesis) is performed thereon. The second separation layer which is an amorphous membrane in which zeolite fine particles are mixed is thereby obtained. The hydrothermal synthesis time in each of Examples 1 to 12 is shown in Table 1. The hydrothermal synthesis temperature is 180 °C.

In the formation of the second separation layer, in Examples 1 to 9, a starting material solution for MTN-type zeolite is used. In preparation of the starting material solution, 6.28 g of 30 mass % of tetramethylammonium hydroxide solution (manufactured by SACHEM, Inc.) is mixed into 146.8 g of distilled water. After that, 14.8 g of about 30 mass % of silica sol (trade name: Snowtex S manufactured by Nissan Chemical Corporation) is added thereto and, and the solution is stirred with the magnetic stirrer (at room temperature for 30 minutes), to thereby obtain the starting material solution.

In Examples 10 and 11, a starting material solution for SOD-type zeolite is used. In preparation of the starting material solution, 23.1 g of alumina sol (manufactured by Nissan Chemical Corporation), 7.6 g of phosphoric acid (manufactured by Wako Pure Chemical Corporation), 21.7 g of potassium hydroxide (manufactured by Wako Pure Chemical Corporation), 125.5 g of distilled water, 48.8 g of tetramethylammonium hydroxide (manufactured by SACHEM, Inc.), and 125.5 g of about 30 mass % of silica sol (trade name: Snowtex S manufactured by Nissan Chemical Corporation) are mixed. After that, the solution is stirred with the magnetic stirrer (at room temperature for 30 minutes), to thereby obtain the starting material solution.

In Example 12, a starting material solution for ETL-type zeolite is used. In preparation of the starting material solution, 2.1 g of alumina sol (manufactured by Nissan Chemical Corporation), 9.3 of rubidium hydroxide (manufactured by Sigma-Aldrich Co. LLC), 0.6 g of sodium hydroxide (manufactured by Sigma-Aldrich Co. LLC), 18.8 g of tetramethylammonium hydroxide (manufactured by SACHEM, Inc.), and 121.4 g of about 30 mass % of silica sol (trade name: Snowtex S manufactured by Nissan Chemical Corporation) are mixed. After that, the solution is stirred with the magnetic stirrer (at room temperature for 30 minutes), to thereby obtain the starting material solution.

Subsequently, by mixing sodium hydroxide into distilled water, a posttreatment liquid having a pH of 9 or higher is prepared. In Examples 1 to 3 and 5 to 12, the posttreatment is performed by immersing the alumina support after forming the second separation layer thereon in the posttreatment liquid for one day or more. After the posttreatment, the alumina support is washed with distilled water and dried at 80 °C for 12 hours or more. In Example 4, the posttreatment is not performed. After that, the temperature of the alumina support in each of Examples 1 to 12 is increased to 450 °C by the electric furnace and kept for 50 hours, to thereby burn and remove the organic SDA. Through the above process, the separation membrane complex in each of Examples 1 to 12 is obtained.

### <Production of Separation Membrane Complex in Comparative Examples 1 and 2>

In production of a separation membrane complex in each of Comparative Examples 1 and 2, an MTN-type zeolite membrane is formed as the first separation layer, and formation of the second separation layer is omitted. A starting material solution in the formation of the MTN-type zeolite membrane is the same as that used for the formation of the second separation layer in Examples 1 to 9. For burning and removing the organic SDA from the MTN-type zeolite membrane which is the first separation layer, the firing temperature in Comparative Example 1 is 700 °C and the firing temperature in Comparative Example 2 is 450 °C. Further, in Table 1, the respective values in Comparative Examples 1 and 2 in the columns of "Firing Temperature" of "Second Separation Layer" each represent the firing temperature in the burning and removal of the organic SDA in the first separation layer.

### <Various Measurements of Second Separation Layer)

In the separation membrane complex in each of Examples 1 to 12 and Comparative Examples 1 and 2, a cross section of the second separation layer perpendicular to a surface of the alumina support is imaged by using a transmission electron microscope at a magnification of 300000 and a TEM image is thereby acquired. In acquisition of the TEM image, a sample is produced by an FIB method using an FIB system (Helios G4 manufactured by FEI Company) and imaged by using a multi-purpose electron microscope (JEM-F200 manufactured by JEOL Co., Ltd.) at an acceleration voltage of 200 kV. In the TEM image, a distance from a boundary between the first separation layer and the second separation layer 14 to a surface of the second separation layer is obtained as the thickness of the second separation layer. Table 2 shows the thickness of the second separation layer in the column of "Film Thickness".

Further, in the TEM image, a region with no plaid pattern is discriminated as the amorphous part and another region with a plaid pattern is discriminated as the zeolite fine particles. In each of two directions perpendicular to each other, a length between both ends of each zeolite fine particle is measured, and an average of the respective lengths in the two directions is obtained as a particle diameter of the zeolite fine particle. Then, an average of respective particle diameters of ten zeolite fine particles is obtained as the average particle diameter. Furthermore, the ratio of an area of the zeolite fine particles to the whole area of the second separation layer in the TEM image is obtained as the proportion of the zeolite fine particles in the second separation layer. Table 2 shows the average particle diameter of the zeolite fine particles in the column of "Particle Diameter of Fine Particle" and shows the proportion of the zeolite fine particles in the second separation layer in the column of "Proportion of Fine Particles".

An analysis of a crystal structure of the zeolite fine particles is performed by acquiring an FFT pattern of the zeolite fine particles in the high-magnification TEM image. It is thereby confirmed that the zeolite fine particles composed of the type of zeolite shown in the column of "Type of Zeolite" of "Second Separation Layer" in Table 1 are formed. Further, the analysis of the crystal structure of the zeolite fine particles may be performed by any other method. In a micro-XRD (wide-angle x-ray diffraction), for example, an X-ray diffraction apparatus (D8 DISCOVER µHR Hybrid manufactured by Bruker AXS Inc.) can be used to perform a measurement by using a CuKα ray as an X-ray source, an output of 50 kV and 22 mA, a pinhole of 300 µmφ as a slit system, and a two-dimensional detector as a detector. In the microscopic Raman spectroscopy, for example, a measurement can be performed by using NRS-5100 manufactured by JASCO Corporation, with a laser wavelength of 532 nm and a measurement wavenumber range of 1200 to 200 cm⁻¹.

### <Performance Evaluation of Separation Membrane Complex>

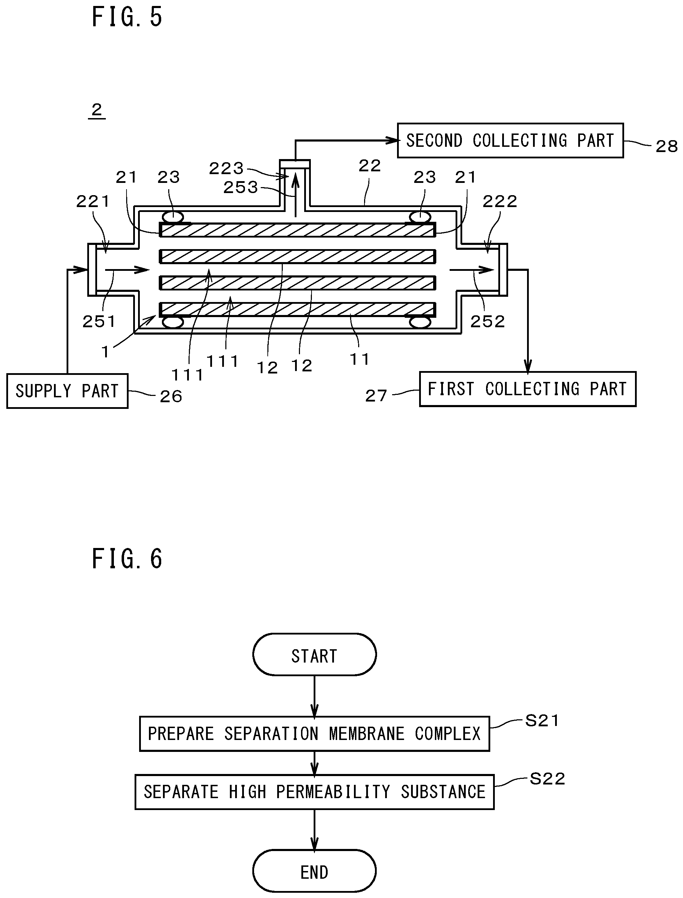

By supplying a mixed gas in which hydrogen and methane are mixed at a volume ratio of 20 : 80 to the separation membrane complex, hydrogen permeance and methane permeance are measured. In the separation membrane complex, the first separation layer and the second separation layer are formed on respective inner surfaces of a plurality of through holes included in the monolith-type alumina support. Both ends of the alumina support, except the through holes, are sealed with glass and the alumina support is accommodated into a housing (see FIG. 5 described later). In other words, the separation membrane complex is disposed inside the housing. Further, a sealing member is disposed between each of both the ends of the alumina support and the housing. In this state, the above-described mixed gas is fed into each of the through holes of the alumina support, and the gas having permeated the first and second separation layers and the alumina support is collected from an exhaust port provided in the housing. In the measurement of the permeance, the pressure of the feed gas (mixed gas) is 0.6 MPa and the pressure of permeate gas is 0.1 MPa (about 1 atmospheric pressure). The hydrogen permeance and the methane permeance are obtained by measuring the amount of permeate gas and the hydrogen concentration and the methane concentration in the permeate gas. Table 2 shows the hydrogen permeance in the column of "Hydrogen Permeance" and shows a value obtained by dividing the hydrogen permeance by the methane permeance in the column of "Hydrogen/Methane Permeance Ratio (0.6MPa)"

Further, instead of the above-described mixed gas, CF₄ (carbon tetrafluoride) gas is supplied to the separation membrane complex and CF₄ permeance is measured. Like in the case using the mixed gas, the pressure of the feed gas is 0.3 MPa and the pressure of permeate gas is 0.1 MPa. Table 2 shows the CF₄ permeance in the column of "CF₄ Permeance (0.3MPa)". The measurement of the CF₄ permeance is performed on the purpose of evaluating firing cracks. In the evaluation of the firing cracks, it is preferable to measure the permeance of a molecule having a dynamic molecular diameter which is 1.5 times or more the average pore diameter of the zeolite composing the second separation layer (in Comparative Example which has a single separation layer, this separation layer), and in a case where the zeolite is MTN-type one, CF₄ is suitable for the measurement.

Furthermore, by supplying the above-described mixed gas to the separation membrane complex again, the hydrogen permeance and the methane permeance are measured. At that time, the pressure of the feed gas is 5 MPa and the pressure of permeate gas is 0.1 MPa. Subsequently, by dividing the hydrogen permeance by the methane permeance, a hydrogen/methane permeance ratio at high pressure (5 MPa) is obtained. By dividing the hydrogen/methane permeance ratio at high pressure (5 MPa) by a hydrogen/methane permeance ratio which is obtained with the pressure of the feed gas being 0.6 MPa ("Hydrogen/Methane Permeance Ratio (0.6MPa)" in Table 2), obtained is a retention rate of the permeance ratio at high pressure to the permeance ratio at low pressure. In the column of "Retention Rate of High-Pressure Permeance Ratio to Low-Pressure Permeance Ratio" of Table 2, it is assumed that the evaluation is "Good" when the retention rate is 0.95 or higher and the evaluation is "Bad" when the retention rate is lower than 0.95.

As shown in Table 2, in the separation membrane complex in each of Examples 1 to 12, the retention rate of the high-pressure permeance ratio to the low-pressure permeance ratio is good. In contrast to this, in the separation membrane complex in each of Comparative Examples 1 and 2, the retention rate is bad since the hydrogen/methane permeance ratio at high pressure is low. Though the reason why the hydrogen/methane permeance ratio at high pressure (i.e., the separation performance) becomes lower in the separation membrane complex in each of Comparative Examples 1 and 2 is not necessarily clear, for example, it can be considered as follows. In Comparative Examples 1 and 2, the second separation layer is omitted and only the first separation layer composed of zeolite is formed on the alumina support. In the firing during burning and removal of the organic SDA, microcracks occur in zeolite particles of the first separation layer due to the stress caused by the difference in the thermal expansion between the alumina support and the first separation layer. When the separation membrane complex is used at high pressure, the microcracks develop into cracks and as a result, the separation performance is reduced. Further, in Comparative Example 1, since the CF₄ permeance is high, it is thought that large cracks occur before the use at high pressure.

On the other hand, in the separation membrane complex in each of Examples 1 to 12, the retention rate of the high-pressure permeance ratio to the low-pressure permeance ratio is good, and in the use of the separation membrane complex at high pressure, reduction in the separation performance is suppressed. The reason for this, for example, can be considered as follows. In the separation membrane complex in each of Examples 1 to 12, since the second separation layer is an amorphous membrane in which the zeolite fine particles are mixed, in the firing during burning and removal of the organic SDA in the second separation layer, the effect of the stress caused by the difference in the thermal expansion between the alumina support and the first and second separation layers is relieved by the amorphous part. As a result, occurrence of the microcracks is suppressed in the zeolite fine particles contained in the second separation layer, and in the use of the separation membrane complex at high pressure. reduction in the separation performance is suppressed.

Though there is a possible case where the second separation layer is composed of only amorphous in the separation membrane complex, since the pore diameter distribution of amorphous is wide, the separation performance in the separation membrane complex becomes lower. In contrast to this, in the separation membrane complex in which the zeolite fine particles whose pore diameter distribution is narrow is mixed in the second separation layer, high separation performance is achieved. In order to more reliably achieve high separation performance, it is preferable that a lot of zeolite fine particles should exist in the second separation layer. In comparison among Examples 1 to 3 and 5 to 12 where the posttreatment of the separation membrane complex is performed, in Examples 1 and 5 to 12 where the proportion of the zeolite fine particles in the second separation layer is not lower than 20 %, high hydrogen/methane permeance ratio is achieved. Therefore, in order to more reliably increase the separation performance, it is preferable that the proportion of the zeolite fine particles in the second separation layer should be not lower than 20 %.

Paying attention to the film thickness of the second separation layer, in Example 1 where the film thickness is 250 nm, the hydrogen permeance significantly decreases. Further, in Example 2 where the film thickness is 4 nm, the hydrogen permeance increases but the hydrogen/methane permeance ratio decreases. Therefore, in order to increase both the hydrogen/methane separation performance and the hydrogen permeance, it is preferable that the thickness of the second separation layer should be not smaller than 5 nm and no larger than 200 nm.

On the other hand, considering that high hydrogen permeance is achieved in Example 9 where the film thickness of the second separation layer is 180 nm, it is thought that the cause of significant decrease in the hydrogen permeance in Example 1 where the film thickness is 250nm is not only the large film thickness but also insufficient removal of the organic SDA in the zeolite fine particles, i.e., remaining of the organic SDA. The average particle diameter of the zeolite fine particles is 120 nm in Example 1 while the average particle diameter thereof is 90 nm in Example 9, and usually the organic SDA is more easily removed by firing as the particle diameter of the zeolite fine particle becomes smaller. Therefore, in order to appropriately remove the organic SDA from the zeolite fine particles of the second separation layer and increase the hydrogen permeance, it is preferable that the average particle diameter of the zeolite fine particles should be not larger than 100 nm. In a case, especially, where the zeolite fine particles are composed of 6-membered ring zeolite whose maximum number of membered rings is small, from which the organic SDA is hard to be removed, it is preferable that the average particle diameter should be within the above-described range. In order to ensure the separation performance to some degree, it is preferable that the average particle diameter of the zeolite fine particles should be not smaller than 1 nm.

As described above, the method of producing the separation membrane complex includes an operation of preparing the porous support (Step S11), an operation of forming the first separation layer which is a membrane composed of zeolite, on the surface of the support (Step S12), and an operation of forming the second separation layer which is an amorphous membrane in which the zeolite fine particles are mixed, on the surface of the first separation layer on an opposite side to the support. Further, the operation of forming the second separation layer includes an operation of immersing the support on which the first separation layer is formed, in the pretreatment liquid containing the oxide of the constituent element which is to constitute the zeolite fine particles, for a predetermined time (Step S13), an operation of taking the support out from the pretreatment liquid and drying the support (Step S14), an operation of forming the second separation layer on the support by immersing the support in the starting material solution containing the constituent element and the organic SDA and performing hydrothermal synthesis (Step S15), and an operation of removing the organic SDA from the second separation layer on the support (Step S17). It is thereby possible to appropriately form the amorphous membrane (second separation layer) in which the zeolite fine particles are mixed and suppress reduction in the separation performance in the use of the separation membrane complex at high pressure.

Herein, in the same manner as disclosed in Japanese Patent Application Laid Open Gazette No. 2020-163369 (above-described Document 1), 6-membered ring zeolite powder having a particle diameter of 100 nm to 300 nm is synthesized, and a thermogravimetric analysis is performed on the 6-membered ring zeolite powder. As a result, it is confirmed that almost 100 % of the organic SDA is removed from the zeolite powder in the firing at 700 °C while a large amount of organic SDA remains in the firing at 500 °C or lower. On the other hand, in the production of the separation membrane complex, when firing is performed at a temperature higher than 500 °C, the difference in the thermal expansion between the support composed of an alumina sintered body, a mullite sintered body, a titania sintered body, and the like and the zeolite membrane becomes larger, to thereby cause cracks.

In contrast to this, as described above, in the separation membrane complex in which the average particle diameter of the zeolite fine particles in the second separation layer is not smaller than 1 nm and not larger than 100 nm, with the firing temperature set at 500 °C or lower, it is possible to achieve appropriate removal of the organic SDA from the zeolite fine particles while suppressing occurrence of the cracks during the firing.

In the above-described production method, between Steps S15 and S17, it is preferable to further include an operation of immersing the support on which the second separation layer is formed in the posttreatment liquid prepared to have the pH of 9 or higher for one day or more (Step S16). It is thereby possible to reduce the density of amorphous in the second separation layer. As a result, in the operation of Step S17, it becomes easier to remove the organic SDA from the zeolite fine particles, and it thereby becomes possible to increase the separation performance and also increase the hydrogen permeance.

Next, with reference to FIGs. 5 and 6, separation of a mixed substance by using the separation membrane complex 1 will be described. FIG. 5 is a view showing a separation apparatus 2. FIG. 6 is a flowchart showing a flow of separating the mixed substance by the separation apparatus 2.

In the separation apparatus 2, a mixed substance containing a plurality of types of fluids (i.e., gases or liquids) is supplied to the separation membrane complex 1, and a substance with high permeability in the mixed substance is caused to permeate the separation membrane complex 1, to be thereby separated from the mixed substance. Separation in the separation apparatus 2 may be performed, for example, in order to extract a substance with high permeability from a mixed substance, or in order to concentrate a substance with low permeability.

The mixed substance (i.e., mixed fluid) may be a mixed gas containing a plurality of types of gases, may be a mixed liquid containing a plurality of types of liquids, or may be a gas-liquid two-phase fluid containing both a gas and a liquid.

The mixed substance contains at least one type of, for example, hydrogen (H₂), helium (He), nitrogen (N₂), oxygen (O₂), water (H₂O), carbon monoxide (CO), carbon dioxide (CO₂), nitrogen oxide, ammonia (NH₃), sulfur oxide, hydrogen sulfide (H₂S), sulfur fluoride, mercury (Hg), arsine (AsH₃), hydrogen cyanide (HCN), carbonyl sulfide (COS), C1 to C8 hydrocarbons, organic acid, alcohol, mercaptans, ester, ether, ketone, and aldehyde.

The nitrogen oxide is a compound of nitrogen and oxygen. The above-described nitrogen oxide is, for example, a gas called NO_{X} such as nitric oxide (NO), nitrogen dioxide (NO₂), nitrous oxide (also referred to as dinitrogen monoxide) (N₂O), dinitrogen trioxide (N₂O₃), dinitrogen tetroxide (N₂O₄), dinitrogen pentoxide (N₂O₅), or the like.

The sulfur oxide is a compound of sulfur and oxygen. The above-described sulfur oxide is, for example, a gas called SO_{X} such as sulfur dioxide (SO₂), sulfur trioxide (SO₃), or the like.

The sulfur fluoride is a compound of fluorine and sulfur. The above-described sulfur fluoride is, for example, disulfur difluoride (F-S-S-F, S=SF₂), sulfur difluoride (SF₂), sulfur tetrafluoride (SF₄), sulfur hexafluoride (SF₆), disulfur decafluoride (S₂F₁₀), or the like.

The C1 to C8 hydrocarbons are hydrocarbons with not less than 1 and not more than 8 carbon atoms. The C3 to C8 hydrocarbons may be any one of a linear-chain compound, a side-chain compound, and a ring compound. Further, the C2 to C8 hydrocarbons may either be a saturated hydrocarbon (i.e., in which there is no double bond or triple bond in a molecule), or an unsaturated hydrocarbon (i.e., in which there is a double bond and/or a triple bond in a molecule). The C1 to C4 hydrocarbons are, for example, methane (CH₄), ethane (C₂H₆), ethylene (C₂H₄), propane (C₃H₈), propylene (C₃H₆), normal butane (CH₃(CH₂)₂CH₃), isobutane (CH (CH₃)₃), 1-butene (CH₂=CHCH₂CH₃), 2-butene (CH₃CH=CHCH₃), or isobutene (CH₂=C(CH₃)₂).

The above-described organic acid is carboxylic acid, sulfonic acid, or the like. The carboxylic acid is, for example, formic acid (CH₂O₂), acetic acid (C₂H₄O₂), oxalic acid (C₂H₂O₄), acrylic acid (C₃H₄O₂), benzoic acid (C₆H₅COOH), or the like. The sulfonic acid is, for example, ethanesulfonic acid (C₂H₆O₃S) or the like. The organic acid may either be a chain compound or a ring compound.

The above-described alcohol is, for example, methanol (CH₃OH), ethanol (C₂H₅OH), isopropanol (2-propanol) (CH₃CH(OH)CH₃), ethylene glycol (CH₂(OH)CH₂(OH)), butanol (C₄H₉OH), or the like.

The mercaptans are an organic compound having hydrogenated sulfur (SH) at the terminal end thereof, and are a substance also referred to as thiol or thioalcohol. The above-described mercaptans are, for example, methyl mercaptan (CH₃SH), ethyl mercaptan (C₂H₅SH), 1-propanethiol (C₃H₇SH), or the like.

The above-described ester is, for example, formic acid ester, acetic acid ester, or the like.

The above-described ether is, for example, dimethyl ether ((CH₃)₂O), methyl ethyl ether (C₂H₅OCH₃), diethyl ether ((C₂H₅)₂O), or the like.

The above-described ketone is, for example, acetone ((CH₃)₂CO), methyl ethyl ketone (C₂H₅COCH₃), diethyl ketone ((C₂H₅)₂CO), or the like.

The above-described aldehyde is, for example, acetaldehyde (CH₃CHO), propionaldehyde (C₂H₅CHO), butanal (butylaldehyde) (C₃H₇CHO), or the like.

In the following description, it is assumed that the mixed substance separated by the separation apparatus 2 is a mixed gas containing a plurality of types of gases.

The separation apparatus 2 includes the separation membrane complex 1, sealing parts 21, a housing 22, two sealing members 23, a supply part 26, a first collecting part 27, and a second collecting part 28. The separation membrane complex 1, the sealing parts 21, and the sealing members 23 are accommodated inside the housing 22. The supply part 26, the first collecting part 27, and the second collecting part 28 are disposed outside the housing 22 and connected to the housing 22.

The sealing parts 21 are members which are attached to both end portions in the longitudinal direction (i.e., in the left and right direction of FIG. 5) of the support 11 and cover and seal both end surfaces in the longitudinal direction of the support 11 and outer surfaces in the vicinity of the end surfaces. The sealing parts 21 prevent a gas from flowing into or out from both the end surfaces of the support 11. The sealing part 21 is, for example, a plate-like member formed of glass or a resin. The material and the shape of the sealing part 21 may be changed as appropriate. Further, since the sealing part 21 is provided with a plurality of openings which coincide with the plurality of through holes 111 of the support 11, both ends of each through hole 111 of the support 11 in the longitudinal direction are not covered with the sealing parts 21. Therefore, the gas or the like can flow into and out from the through hole 111 from both ends thereof.

There is no particular limitation on the shape of the housing 22 but is, for example, a tubular member having a substantially cylindrical shape. The housing 22 is formed of, for example, stainless steel or carbon steel. The longitudinal direction of the housing 22 is substantially in parallel to the longitudinal direction of the separation membrane complex 1. A supply port 221 is provided at an end portion on one side in the longitudinal direction of the housing 22 (i.e., an end portion on the left side in FIG. 5), and a first exhaust port 222 is provided at another end portion on the other side. A second exhaust port 223 is provided on a side surface of the housing 22. The supply part 26 is connected to the supply port 221. The first collecting part 27 is connected to the first exhaust port 222. The second collecting part 28 is connected to the second exhaust port 223. An internal space of the housing 22 is a sealed space that is isolated from the space around the housing 22.

The two sealing members 23 are arranged around the entire circumference between an outer surface of the separation membrane complex 1 and an inner surface of the housing 22 in the vicinity of both end portions of the separation membrane complex 1 in the longitudinal direction. Each of the sealing members 23 is a substantially annular member formed of a material that the gas cannot permeate. The sealing member 23 is, for example, an O-ring formed of a flexible resin. The sealing members 23 come into close contact with the outer surface of the separation membrane complex 1 and the inner surface of the housing 22 around the entire circumferences thereof. In the exemplary case of FIG. 5, the sealing members 23 come into close contact with outer surfaces of the sealing parts 21 and indirectly come into close contact with the outer surface of the separation membrane complex 1 with the sealing parts 21 interposed therebetween. The portions between the sealing members 23 and the outer surface of the separation membrane complex 1 and between the sealing members 23 and the inner surface of the housing 22 are sealed, and it is thereby mostly or completely impossible for the gas to pass through the portions.

The supply part 26 supplies the mixed gas into the internal space of the housing 22 through the supply port 221. The supply part 26 includes, for example, a blower or a pump for pumping the mixed gas toward the housing 22. The blower or the pump includes a pressure regulating part for regulating the pressure of the mixed gas to be supplied to the housing 22. The first collecting part 27 and the second collecting part 28 each include, for example, a storage container for storing the gas led out from the housing 22 or a blower or a pump for transporting the gas.

When separation of the mixed gas is performed, the above-described separation apparatus 2 is prepared and the separation membrane complex 1 is thereby prepared (Step S21). Subsequently, the supply part 26 supplies a mixed gas containing a plurality of types of gases with different permeabilities through the laminated membrane 12 into the internal space of the housing 22. For example, the main component of the mixed gas includes H₂ and CH₄. The mixed gas may contain any gas other than H₂ or CH₄. The pressure (i.e., feed pressure) of the mixed gas to be supplied into the internal space of the housing 22 from the supply part 26 is, for example, 0.1 MPa to 20.0 MPa. The temperature for separation of the mixed gas is, for example, 10 °C to 150 °C.

The mixed gas supplied from the supply part 26 into the housing 22 is fed from the left end of the separation membrane complex 1 in this figure into the inside of each through hole 111 of the support 11 as indicated by an arrow 251. Gas with high permeability (which is, for example, H₂, and hereinafter is referred to as a "high permeability substance") in the mixed gas permeates the laminated membrane 12 provided on the inner surface of each through hole 111 and the support 11, and is led out from the outer surface of the support 11. The high permeability substance is thereby separated from gas with low permeability (which is, for example, CH₄, and hereinafter is referred to as a "low permeability substance") in the mixed gas (Step S22). The gas (hereinafter, referred to as a "permeate substance") led out from the outer surface of the support 11 is collected by the second collecting part 28 through the second exhaust port 223 as indicated by an arrow 253. The pressure (i.e., permeate pressure) of the gas to be collected by the second collecting part 28 through the second exhaust port 223 is, for example, about 1 atmospheric pressure (0.101 MPa).

Further, in the mixed gas, a gas (hereinafter, referred to as a "non-permeate substance") other than the gas which has permeated the laminated membrane 12 and the support 11 passes through each through hole 111 of the support 11 from the left side to the right side in this figure and is collected by the first collecting part 27 through the first exhaust port 222 as indicated by an arrow 252. The pressure of the gas to be collected by the first collecting part 27 through the first exhaust port 222 is, for example, substantially the same as the feed pressure. The non-permeate substance may include a high permeability substance that has not permeated the laminated membrane 12, as well as the above-described low permeability substance.

In the above-described separation membrane complex 1 and the above-described method of producing the separation membrane complex 1, various modifications can be made.

The thickness of the second separation layer 14 is not limited to the range not smaller than 5 nm and not larger than 200 nm, and the average particle diameter of the zeolite fine particles 141 contained in the second separation layer 14 is also not limited to the range not smaller than 1 nm and not larger than 100 nm. The proportion of the zeolite fine particles 141 in the second separation layer 14 may be lower than 20 %.

The separation membrane complex 1 may be produced by any method other than the above-described production method.

In the separation apparatus 2 and the separation method, any substance other than the substances exemplarily shown in the above description may be separated from the mixed substance.

The configurations in the above-described preferred embodiment and variations may be combined as appropriate only if those do not conflict with one another.

While the invention has been shown and described in detail, the foregoing description is in all aspects illustrative and not restrictive. It is therefore understood that numerous modifications and variations can be devised without departing from the scope of the invention.

### INDUSTRIAL APPLICABILITY

The separation membrane complex of the present invention can be used, for example, as a separation membrane for hydrogen, and can be further used in various fields, as a separation membrane for any of various substances other than hydrogen, an adsorption membrane for any of various substances, or the like.

### REFERENCE SIGNS LIST

- 1: Separation membrane complex
- 11: Support
- 13: First separation layer
- 14: Second separation layer
- 141: Zeolite fine particle
- S11 to S17, S21, S22: Step

## Claims

1. A separation membrane complex, comprising:
a porous support;
a first separation layer in contact with a surface of said support, said first separation layer being a membrane composed of zeolite; and
a second separation layer in contact with a surface of said first separation layer on an opposite side to said support, said second separation layer being an amorphous membrane in which zeolite fine particles are mixed.

2. The separation membrane complex according to claim 1, wherein
a thickness of said second separation layer is not smaller than 5 nm and not larger than 200 nm.

3. The separation membrane complex according to claim 1, wherein
an average particle diameter of said zeolite fine particles contained in said second separation layer is not smaller than 1 nm and not larger than 100 nm.

4. The separation membrane complex according to any one of claims 1 to 3, wherein
a proportion of said zeolite fine particles in said second separation layer is not lower than 20 % in a cross section perpendicular to said surface of said support.

5. A method of producing a separation membrane complex, comprising:
a) preparing a porous support;
b) forming a first separation layer which is a membrane composed of zeolite, on a surface of said support; and
c) forming a second separation layer which is an amorphous membrane in which zeolite fine particles are mixed, on a surface of said first separation layer on an opposite side to said support,
wherein said operation c) includes:
c1) immersing said support on which said first separation layer is formed, in a pretreatment liquid containing an oxide of a constituent element which is to constitute said zeolite fine particles, for a predetermined time;
c2) taking said support out from said pretreatment liquid and drying said support;
c3) forming said second separation layer on said support by immersing said support in a starting material solution containing said constituent element and an organic structure-directing agent and performing hydrothermal synthesis; and
c4) removing said organic structure-directing agent from said second separation layer on said support.

6. The method of producing a separation membrane complex according to claim 5, further comprising:
immersing said support on which said second separation layer is formed, in a posttreatment liquid prepared to have a pH of 9 or higher, for one day or more between said operation c3) and said operation c4).
